# EUROPÄISCHE PATENTSCHRIFT

(11) **EP 2 516 873 B1**
(45) Veröffentlichungstag und Bekanntmachung des Hinweises auf die Patenterteilung: **16.03.2016**
(21) Anmeldenummer: 10808896.4
(22) Anmeldetag: 13.12.2010
(51) Int. Cl.: F16D 25/12, F16D 25/08, F16D 13/75, F16D 25/10, F16D 21/06

(54) **VERFAHREN ZUR EINSTELLUNG EINES LÜFTSPIELS VON KUPPLUNGSEINRICHTUNGEN**
METHOD FOR ADJUSTING A CLEARANCE OF CLUTCH DEVICES
PROCÉDÉ POUR RÉGLER UN JEU DE DISPOSITIFS D'EMBRAYAGE

(30) Priorität: 22.12.2009 DE 102009059961
(43) Veröffentlichungstag der Anmeldung: 31.10.2012
(73) Patentinhaber: Schaeffler Technologies AG & Co. KG, 91074 Herzogenaurach (DE)
(72) Erfinder: KREBS, Florian, 77815 Bühl (DE); DAIKELER, René, 77830 Bühlertal (DE); HOPPE, Marcus, 77855 Achern (DE)
(86) Internationale Anmeldenummer: PCT/DE2010/001454
(87) Internationale Veröffentlichungsnummer: WO 2011/076170

(56) Entgegenhaltungen:
- WO-A1-97/42426
- WO-A1-2010/006576
- DE-A1- 10 330 165
- DE-A1-102004 047 095
- DE-A1-102006 017 711
- FR-A1- 2 851 627
- FR-A1- 2 891 038
- FR-A1- 2 893 686
- US-A- 2 864 480
- US-A- 5 960 923

## Beschreibung

Die Erfindung betrifft ein Verfahren zur Einstellung des Lüftspiels direkt betätigbarer Kupplungseinrichtungen, insbesondere von Doppelkupplungen mit einem Gehäuse und einer im Gehäuse gelagerten Betätigungsvorrichtung zum Aufbringen einer Betätigungskraft frei von Übersetzungen auf ein an der Kupplungseinrichtung wirkendes Betätigungselement, insbesondere Drucktopf.

Kupplungseinrichtungen, insbesondere reibschlüssige Kupplungseinrichtungen, wirken durch Wirkverbindung reibschlüssig miteinander zu koppelnder Elemente. Dazu ist es erforderlich, eine Anpresskraft über eine Betätigungsvorrichtung auf die einzelnen miteinander in Wirkverbindung bringbaren Elemente aufzubringen. Zur Erzeugung derartiger Anpresskräfte und zur Übertragung dieser auf die miteinander in Wirkverbindung bringbaren Elemente bestehen eine Vielzahl von Möglichkeiten. Dabei werden insbesondere sogenannte direkt betätigbare Kupplungseinrichtungen, bei welchen die Betätigungsvorrichtung direkt auf die jeweiligen miteinander in Wirkverbindung bringbaren Elemente wirkt und nicht direkt betätigbare andere Kupplungseinrichtungen, bei welchen die Übertragung der entsprechenden Kräfte durch ein Übersetzungsverhältnis erfolgt, unterschieden.

Direkt betätigte Kupplungseinrichtungen, insbesondere integriert in Doppelkupplungseinrichtungen sind beispielhaft aus der Druckschrift DE 10 2004 047 095 A1 vorbekannt. Die Ausführung gemäß dieser Druckschrift ist dadurch charakterisiert, dass das zwei Kupplungseinrichtungen aufweisende Kupplungsaggregat zur Drehmomentübertragung zwischen einer Antriebsmaschine und einem Getriebe angeordnet ist und jede einzelne Kupplungseinrichtung zumindest eine Kupplungsscheibe aufweist, der eine eigene anzutreibende Welle zugeordnet ist, wobei die einzelnen Kupplungseinrichtungen jeweils unabhängig voneinander über jeweils einen Betätigungsmechanismus ein- und ausrückbar sind. Die Schließkraft der einzelnen Kupplungseinrichtung wird dabei vom Betätigungsmechanismus direkt aufgebracht und somit im Verhältnis 1 : 1 auf die Kupplungseinrichtung übertragen. Dies gilt in Analogie auch für sogenannte direkt betätigte einfache Kupplungseinrichtungen. Bei diesen gehen bei einem Richtvorgang des Betätigungselementes die Geometrietoleranzen und die Toleranzen an den einzelnen die Kraft aufbringbaren Elemente direkt in die Lüftspielstoleranz mit ein und beeinflussen dabei das Lüftspiel direkt. Bei anderen Kupplungseinrichtungen, insbesondere mit Verschleißnachstellung, erfolgt der Toleranzausgleich der Lüftspielseinstellung über die Verschleißnachstellung. Bei konventionellen Kupplungseinrichtungen ohne Verschleißnachstellung erfolgt der Einstellvorgang über ein Richten der an den Betätigungselementen vorgesehenen Zungen, wobei das Übersetzungsverhältnis größer 1 ist und sich somit die Geometrietoleranzen und Einstellgenauigkeiten nur um einen durch das Übersetzungsverhältnis geteilten Anteil auf das Lüftspiel auswirken können.

Aus der DE102006017711 A1 ist eine hebelübersetzte Kupplungseinrichtung bekannt, die ein Ausgleichselement zwischen dem Ausrücklager und dem Kolben der Betätigungseinrichtung vorsieht. Dieses Ausgleichselement ändert seine axiale Ausdehnung zur Verschleißnachstellung.

Entsprechend ist aus der US2,864,480 ein Federelement zwischen Kolben und der Gehäuse der Betätigungseinrichtung bekannt, welche jeweils durch die einwirkende Federkraft als Verschleißnachstellung dient.

Der Erfindung liegt daher die Aufgabe zugrunde, ein Verfahren zur Einstellung des Lüftspiels von Kupplungseinrichtungen, bei welchen die Betätigungskraft frei von einer Über- oder Untersetzung auf die jeweiligen reibschlüssig miteinander zu verbindenden Elemente aufgebracht wird, derart weiterzuentwickeln, dass das Lüftspiel möglichst genau und konstruktiv einfach umsetzbar eingestellt werden kann.

Die erfindungsgemäße Lösung ist durch die Merkmale des Anspruchs 1 charakterisiert. Vorteilhafte Ausgestaltungen sind in den Unteransprüchen beschrieben.

Ein erfindungsgemäßes Verfahren zur Einstellung des Lüftspiels einer direktbetätigbaren Kupplungseinrichtung mit einem Gehäuse und einer im Gehäuse über ein Deckellager gegenüber der Kupplungseinrichtung zentrierten, beziehungsweise abgestützten und lagerbaren Betätigungsvorrichtung mit zumindest einem in einem Betätigungsvorrichtungsgehäuse axial verlagerbaren Kolben zum Aufbringen einer Betätigungskraft frei von Übersetzungen auf ein an der Kupplungseinrichtung wirkendes Betätigungselement und einem am Kolben vorgesehenen und im geöffneten Zustand der Kupplungseinrichtung mit einem Anschlag am Betätigungsvorrichtungsgehäuse zusammenwirkenden Endanschlag, ist dadurch gekennzeichnet, dass ein vorgebbares Soll-Lüftspiel an der Kupplungseinrichtung als Funktion zumindest einer, ein Ist-Lüftspiel wenigstens mittelbar charakterisierenden Größe und zumindest einer die Geometrie der Betätigungsvorrichtung wenigstens mittelbar charakterisierenden Größe durch Einstellen des Endanschlages am Kolben oder des Anschlages am Betätigungsvorrichtungsgehäuse eingestellt wird.

Der Endanschlag am Kolben ist durch eine axiale, zum Betätigungsvorrichtungsgehäuse gerichtete Endanschlagfläche charakterisiert. Der Anschlag am Betätigungsvorrichtungsgehäuse ist durch eine axial zum Kolben gerichtete Anschlagfläche charakterisiert.

Vorzugsweise handelt es sich bei der Endanschlagfläche und der Anschlagfläche jeweils um Ringflächen oder aber Ringsegmentflächen, die sich im Wesentlichen über einen Großteil, vorzugsweise zumindest ¾ in Umfangsrichtung des Kolbens beziehungsweise des Betätigungsvorrichtungsgehäuses verlaufend erstrecken.

Durch das erfindungsgemäße Verfahren erfolgt eine aktive Einstellung eines Soll-Lüftspiels durch die aktive Anpassung des Abstandes zwischen einer festen Referenzfläche an der Betätigungsvorrichtung und dem Betätigungselement der Kupplungseinrichtung, insbesondere einem mit diesem gekoppelten Betätigungslager durch die Einstellung der Lage der Wirkfläche des Kolbens im geöffneten Zustand der Kupplungseinrichtung und damit des Abstandes zwischen Betätigungsvorrichtungsgehäuse und Betätigungselement beziehungsweise Betätigungslager beziehungsweise der wirksamen Kolbenlänge. Die erfindungsgemäße Lösung ermöglicht eine sehr genaue Einstellung des Lüftspiels, wobei die Möglichkeit der Verstellung des Endanschlages am Kolben oder des Anschlages am Betätigungsvorrichtungsgehäuse weitestgehend frei vom Einfluss geometrischer Toleranzen im Übertragungsweg der Betätigungskraft zur Kupplung ist. Ein weiterer wesentlicher Vorteil ist darin zu sehen, dass zur Einstellung des Lüftspiels keine aufwendige Verstellung oder Kalibrierung an der Kupplungseinrichtung selbst, insbesondere den einzelnen Kupplungsteilen und der mit diesen drehfest verbundenen Komponenten sowie dem Betätigungselement und dem Betätigungslager erforderlich ist. Der Ausgleich wird vollständig in die Betätigungsvorrichtung verlagert, so dass die Kupplungsteile der Kupplungseinrichtung selbst und gegebenenfalls das Betätigungselement mit Betätigungslager bei der Einstellung des Lüftspiels keine Änderung erfahren.

Grundsätzlich bestehen zur Verstellung des Endanschlages am Kolben und des Anschlages am Betätigungselement unterschiedliche Möglichkeiten.

Gemäß einer ersten besonders vorteilhaften Variante der ersten und zweiten Ausführung zur Verstellung des Endanschlages am Kolben oder des Anschlages an der Betätigungsvorrichtung werden der Endanschlag oder der Anschlag von zumindest einem zwischen Kolben und Betätigungsvorrichtungsgehäuse angeordneten axialen Abstandselement, insbesondere Schimmelement gebildet, das bei Zuordnung zum Kolben eine Endanschlagfläche bildet und bei Zuordnung zum Betätigungsvorrichtungsgehäuse eine Anschlagfläche und dessen Dicke als Funktion eines Sollabstandes zwischen dem Betätigungsvorrichtungsgehäuse und dem Betätigungselement oder eines mit diesem gekoppelten Betätigungslagers wenigstens mittelbar beschreibenden Richtmaßes eingestellt wird. Das Richtmaß steht in direktem funktionalem Zusammenhang mit dem Sollabstand. Vorzugsweise beschreibt das Richtmaß direkt die erforderliche Dicke des Abstandselementes. Diese Lösung bietet den Vorteil, vollkommen frei von Modifikationen an der Betätigungsvorrichtung auszukommen. Die Funktion des oder der Abstandselemente besteht darin, bei Kupplungsverschleiß das Lüftspiel durch eine Anpassung der Lage der Kupplungsteile zueinander, insbesondere des über das Betätigungselement beaufschlagbaren Kupplungsteiles, aktiv anzupassen, indem die im geöffneten Zustand zwischen Betätigungsvorrichtungsgehäuse und Betätigungselement wirksame Kolbenlänge variiert wird.

Die Zuordnung des Abstandselementes erfolgt durch eine Fixierung dessen am jeweiligen Bauteil - Kolben oder Betätigungsvorrichtungsgehäuse. Diese kann kraft- oder formschlüssig erfolgen. Vorzugsweise ist die Verbindung derart ausgebildet und ausgeführt, dass auch eine Sicherung gegenüber Verdrehung erfolgt. In besonders vorteilhafter Ausführung ist die Verbindung direkt als drehfeste Verbindung ausgelegt.

Diese Ausführung bietet den Vorteil, dass die Einstellung des Lüftspiels vollkommen frei von Modifikationen an den einzelnen Bauteilen und Komponenten der Kupplungseinrichtung und der Betätigungsvorrichtung, insbesondere dem Kolben und Betätigungsvorrichtungsgehäuse erfolgen kann und eine einfache Anpassung an verschiedene geforderte Endanschlag- oder Anschlagpositionen möglich ist, wobei hier die Position des Endanschlages oder Anschlages durch gezielte Auswahl des Abstandselementes oder die Reihenschaltung derartiger Abstandselemente, insbesondere bei Verwendung von Standardbauteilen eingestellt werden kann. Diese Ausführung bietet ferner den Vorteil, dass das die Funktion des Endanschlages oder Anschlages im geöffneten Funktionszustand der Kupplung übernehmende Bauteil einfach auswechselbar ist.

Eine zweite Variante der ersten Ausführung zur Verstellung des Endanschlages ist durch die Ausführung des Endanschlages am Kolben von einem am Kolben axial verstellbaren und die Endanschlagfläche bildenden Bauteil charakterisiert. Die Änderung der Lage des Endanschlages erfolgt durch Verschiebung in Längsrichtung am Kolben und damit seiner Lage gegenüber der am Betätigungselement wirksamen Kolbenfläche als Funktion eines Sollabstandes zwischen dem Betätigungsvorrichtungsgehäuse und dem Betätigungselement oder eines mit diesem gekoppelten Betätigungslagers wenigstens mittelbar beschreibenden Richtmaßes. Diese Ausführung ist durch eine geringe Modifikation am Kolben charakterisiert.

Demgegenüber besteht gemäß einer dritten Variante der ersten Ausführung zur Verstellung des Endanschlages die Möglichkeit, den Endanschlag aktiv durch Änderung der Länge des Kolbens als Funktion eines Sollabstandes zwischen dem Betätigungsvorrichtungsgehäuse und dem Betätigungselement oder eines mit diesem gekoppelten Betätigungslagers wenigstens mittelbar beschreibenden Richtmaßes einzustellen. Dazu umfasst der Kolben zumindest zwei zueinander in axialer Richtung verstellbare Kolbenteile, wobei an einem der Kolbenteile gegenüber diesem ortsfest die Endanschlagfläche angeordnet ist. Die Verstellung der Endanschlagfläche erfolgt hier indirekt über die Längung des Kolbens.

In Analogie gelten die Aussagen auch für die zweite Ausführung der Verstellung des Anschlages gegenüber dem Betätigungsvorrichtungsgehäuses, wobei hier insbesondere die bereits genannte erste Variante von besonderer Bedeutung ist. Gemäß einer zweiten Variante der zweiten Ausführung wird der Anschlag am Betätigungsvorrichtungsgehäuse von einem an diesem axial verstellbaren Bauteil gebildet und der Anschlag durch Änderung seiner Lage gegenüber dem Betätigungsvorrichtungsgehäuse als Funktion eines Sollabstandes zwischen dem Betätigungsvorrichtungsgehäuse und dem Betätigungselement oder eines mit diesem gekoppelten Betätigungslagers wenigstens mittelbar beschreibenden Richtmaßes eingestellt.

Die Art der Verstellung erfolgt dabei in Abhängigkeit der Ausführung des Endanschlages und des Anschlages.

Die Bestimmung des den Sollabstand zwischen dem Betätigungsvorrichtungsgehäuse und dem Betätigungselement oder eines mit diesem gekoppelten Betätigungslagers wenigstens mittelbar beschreibende Richtmaß kann dabei zum einen auf der Basis der Geometrievermessung der Kupplungseinrichtung in Kombination mit der Geometrievermessung der Betätigungsvorrichtung und zum anderen durch die aktive Bestimmung des Lüftspiels als Funktion der Kraft über den Einrückweg in Kombination mit der Geometrievermessung der Betätigungsvorrichtung erfolgen.

Im erst genannten Fall wird die Kupplungseinrichtung über eine Halteplatte oder die Lageranordnung aufgenommen und die zumindest eine, das Ist-Lüftspiel wenigstens mittelbar charakterisierende Größe wird von zumindest einem Ist-Wert, einer die Geometrie der Kupplungseinrichtung im entlasteten Zustand wenigstens mittelbar charakterisierenden Größe gebildet. Diese Größe beinhaltet ein, den von der Kupplungseinrichtung umschlossenen Bauraum beschreibendes, auf die Lagerung und/oder das Gehäuse bezogene relevantes Höhenmaß. In einer ersten Variante beschreibt das Höhenmaß dabei den axialen Abstand des an der Kupplungseinrichtung wirkenden Bereichs des Betätigungselementes von einer kupplungsseitigen Gehäusewandung. Die geometrische Vermessung der Kupplungseinrichtung erfolgt somit nicht gegenüber der Lageranordnung zur Anbindung der Betätigungsvorrichtung sondern gegenüber einer anderen Referenzebene als die zur geometrischen Vermessung der Betätigungsvorrichtung, weshalb hier Toleranzen innerhalb der Kupplungseinrichtung zu berücksichtigen sind. Demgegenüber bietet die Bestimmung eines Höhenmaßes gemäß einer zweiten Variante, welches den axialen Abstand des an der Kupplungseinrichtung wirkenden Bereichs des Betätigungselementes.von einer betätigungsvorrichtungsseitigen Gehäusewandung, insbesondere der Lageranordnung beinhaltet, den Vorteil der gleichen Referenzebene, wodurch Toleranzen unberücksichtigt bleiben können.

Im zweiten Fall erfolgt die Ermittlung des Ist-Lüftspiel durch eine Kraft-Wegmessung, insbesondere Erfassung des Einrückweges über die Kraft, wobei der Tastpunkt, d.h. der Betriebpunkt des Greifens der Kupplungseinrichtung bestimmt wird.

Für beide Ausführungen kann als die, die Geometrie der Betätigungsvorrichtung wenigstens mittelbar charakterisierenden Größe ein geometrisch relevantes Höhenmaß der Betätigungsvorrichtung angesehen werden, welches den axialen Abstand zwischen der Anbindung der Betätigungsvorrichtung am Gehäuse oder der Lageranordnung und dem Wirkbereich der Betätigungsvorrichtung am Betätigungselement beinhaltet.

Weitere geometrische Größen bei der Vermessung der Kupplungseinrichtung und der Betätigungsvorrichtung sind denkbar. Entscheidend ist, dass aus den erfassbaren Größen das erforderliche Richtmaß zur Anpassung des Lüftspiels ableitbar ist.

Die Einstellung erfolgt dabei derart, dass zuerst das erforderliche Richtmaß als Funktion zumindest einer, ein Ist-Lüftspiel wenigstens mittelbar charakterisierenden Größe und zumindest einer die Geometrie der Betätigungsvorrichtung wenigstens mittelbar charakterisierenden Größe bestimmt wird, die erforderlichen Maßnahmen entsprechend der genannten Varianten der ersten oder zweiten Ausführung getroffen werden und im Anschluss die Kupplung mit der Betätigungsvorrichtung zum Kupplungsaggregat zusammengesetzt werden kann.

Die erfindungsgemäße Lösung wird nachfolgend anhand von Figuren erläutert. Darin ist im Einzelnen folgendes dargestellt:
- Figur 1a: verdeutlicht anhand eines Axialschnittes einer Doppelkupplung die relevanten geometrischen Maße für ein Einstellverfahren gemäß einer besonders vorteil haften ersten Variante einer der ersten Ausführung eines erfindungsgemäßen Verfahrens;
- Figur 1b: verdeutlicht ein Detail gemäß Figur 1 a;
- Figur 2: zeigt eine Ausführung gemäß Figur 1 als Explosionsdarstellung;
- Figuren 3a und 3b: verdeutlichen mögliche Ausführungen der Schimmelemente;
- Figur 4a: verdeutlicht anhand eines Axialschnittes einer Doppelkupplung die relevanten geometrischen Maße für ein Einstellverfahren gemäß einer dritten Variante ei ner ersten Ausführung eines nicht erfindungsgemäßen Verfahrens;
- Figur 4b: verdeutlicht ein Detail gemäß Figur 4a;
- Figur 5: verdeutlicht anhand eines Signalflußbildes den Ablauf eines Einstellverfahrens;
- Figur 6a: verdeutlicht anhand eines Signalflußbildes den Ablauf des Verfahrensschrittes VA durch Geometrievermessung;
- Figur 6b: verdeutlicht anhand eines Signalflußbildes den Ablauf des Verfahrensschrittes VA gemäß einer alternativen Ermittlung des Lüftspiels.

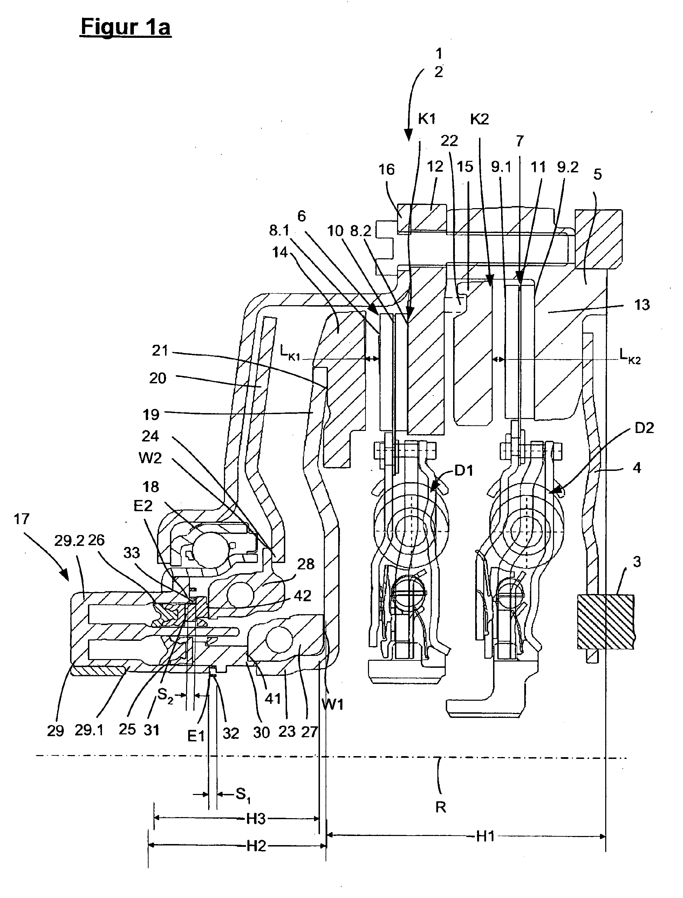

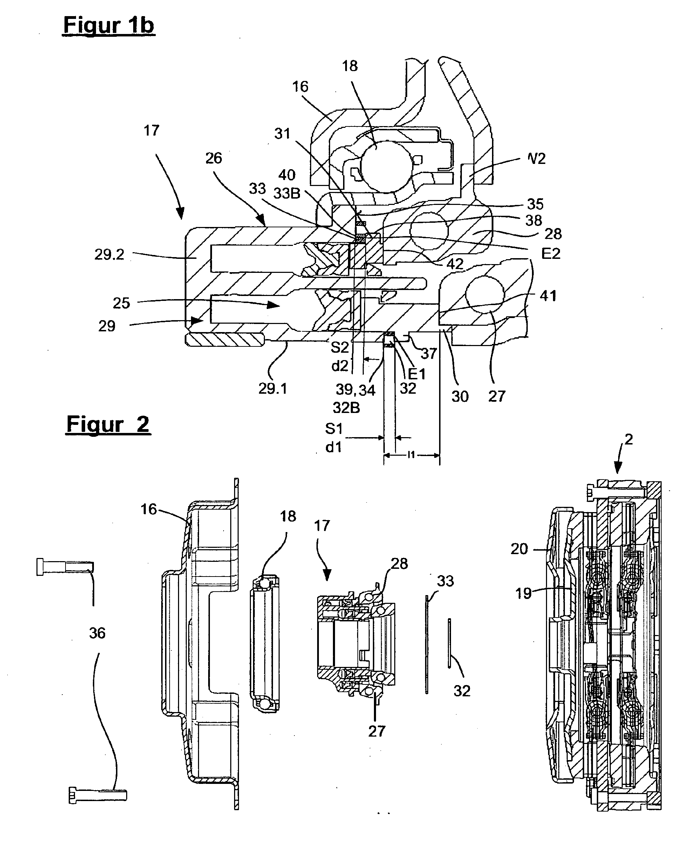

Die Figur 1 a verdeutlicht einen Ausschnitt aus einem Axialschnitt eines Kupplungsaggregates 1, welches beispielhaft in Form einer Doppelkupplung 2 mit zwei Kupplungseinrichtungen K1, K2 ausgeführt ist. Anhand dieser wird der Grundaufbau und die Grundfunktion derartiger Kupplungseinrichtungen K1, K2 und der dieser zugeordneten Betätigungseinrichtung zur Direktbetätigung sowie ein besonders vorteilhaftes Einstellverfahren zur Einstellung eines Lüftspiels L_{K1}, L_{K2} der einzelnen Kupplungseinrichtungen K1, K2 gemäß einer ersten Variante der ersten Ausführung des erfindungsgemäßen Verfahrens beschrieben. Die Figur 1 b verdeutlicht in einer Detailansicht die Ausführung der Betätigungsvorrichtung 17 gemäß einer vorteilhaften Ausführung des ersten Lösungsansatzes.

Das Kupplungsaggregat 1 in Form einer Doppelkupplung 2 umfasst zwei Kupplungseinrichtungen K1 und K2, bei welchen die jeweilige Betätigungskraft ohne Übersetzung an der einzelnen Kupplungseinrichtung K1, K2 direkt aufgebracht wird. Derartige Kupplungsaggregate 1 dienen dabei der Verbindung eines antriebsseitigen Bauteils, insbesondere einer antreibenden Welle, insbesondere einer hier nur angedeuteten Kurbelwelle 3 einer Verbrennungskraftmaschine mit zwei antreibbaren Wellen, insbesondere zwei Getriebeeingangswellen, die hier nicht dargestellt sind, und der wahlweisen Trennung von diesen. Das Kupplungsaggregat 1 ist dazu über eine Antriebsplatte 4 mit der Verbrennungskraftmaschine verbunden. Die von der Kurbelwelle 3 her in die Antriebsplatte 4 eingeleiteten Torsionsschwingungen werden auf das Kupplungsaggregat 1 beziehungsweise je nach Betätigung der einzelnen Kupplungseinrichtungen K1 und K2 auf die jeweiligen, mit diesen verbundenen Getriebeeingangswellen übertragen. Dabei kann die Kopplung zwischen der Antriebsplatte 4 und der Kurbelwelle 3 direkt, wie in der Figur 1 dargestellt, erfolgen oder über weitere im Kraftfluss liegende Übertragungselemente, beispielsweise in Form von elastischen Kupplungen, insbesondere Vorrichtungen zur Dämpfung von Schwingungen, erfolgen.

Die Antriebsplatte 4 ist im Bereich ihres Innenumfanges mit der Kurbelwelle 3 fest verbunden. Die Antriebsplatte 4 ist dazu beispielhaft als Blechformbauteil ausgeführt, welches als Bestandteil eines drehbaren Gehäuses 5 für das Kupplungsaggregat 1 dient.

Die Kupplungseinrichtungen K1, K2 sind als reibschlüssige Kupplungseinrichtungen ausgebildet, umfassend zumindest eine reibflächentragende und/oder reibflächenbildende Kupplungsscheibe, hier beispielhaft für jede der Kupplungseinrichtungen K1 und K2 mit 6 und 7 bezeichnet, wobei die Reibflächen der Kupplungsscheibe 6 jeweils mit 8.1 und 8.2 bezeichnet sind und beidseitig an den in axialer Richtung ausgerichteten Stirnseiten eines Trägers 10 angeordnet sind, ferner in Analogie die Reibflächen der Kupplungsscheibe 7 mit 9.1 und 9.2 bezeichnet sind, welche an den in axialer Richtung voneinander weg weisenden Stirnseiten des Trägers 11 der Kupplungsscheibe 7 in Form von Reibbelägen angeordnet sind. Denkbar ist auch die Ausbildung der Reibflächen 8.1, 8.2 beziehungsweise 9.1 und 9.2 direkt an den jeweiligen Trägern 10 und 11 der Kupplungsscheiben 6, 7.

Dabei sind die Kupplungsscheibe 6 und die Kupplungsscheibe 7 jeweils von einer der hier nicht dargestellten Getriebewellen aufgenommen. Die Kupplungsscheibe 7 ist beispielsweise auf einer radial inneren Welle und die Kupplungsscheibe 6 auf der äußeren, vorzugsweise als Hohlwelle und koaxial zur radial inneren Welle verlaufenden Welle aufgenommen. Die Kupplungsscheiben 6 und 7 sind hier über Vorrichtungen D1, D2 zur Dämpfung von Schwingungen mit den Getriebeeingangswellen gekoppelt.

Die Antriebsplatte 4, insbesondere das Gehäuse 5, trägt eine Gegendruckplatte 13 für die Kupplungsscheibe 7 der zweiten Kupplungseinrichtung K2, ferner ist an dieser wiederum und damit wenigstens mittelbar an der Antriebsplatte 4 die Gegendruckplatte 12 für die Kupplungsscheibe 6 der ersten Kupplungseinrichtung K1 befestigt. Beide Gegendruckplatten 12 und 13 sind somit über radial äußere Bereiche über Befestigungsmittel, welche beispielhaft von kraftschlüssigen Befestigungsmittel in Form von Schrauben gebildet werden, fest miteinander verbunden. Die Gegendruckplatten 12, 13 können am Gehäuse 5 befestigt oder aber als Bestandteile dessen ausgebildet sein.

Ferner besitzt jede der einzelnen Kupplungseinrichtungen K1, K2 eine Anpressplatte 14 beziehungsweise 15, welche in bekannter Weise über Blattfederelemente entweder unmittelbar oder mittelbar drehfest mit den Gegendruckplatten 12, 13 verbunden werden kann.

Bei Ausführungen in Form von Doppelkupplungen 2 ist die Anpressplatte 15 der zweiten Kupplungseinrichtung K2 in axialer Richtung zwischen den beiden Gegendruckplatten 13 und 12 angeordnet. Beide Gegendruckplatten 12, 13 sind ferner mit einem weiteren Bestandteil in Form eines, eine Wandung bildenden Deckels 16 zur Ausbildung des Gehäuses 5 für die Kuppiungseinrichtungen K1, K2 verbunden. Das Kupplungsgehäuse 5 dient der Zentrierung einer Betätigungsvorrichtung 17 in Form eines Ein- oder Ausrücksystems, über welche die einzelnen Kupplungseinrichtungen K1 und K2 wahlweise betätigbar sind. Die Betätigungsvorrichtung 17 ist mittels einer Lageranordnung 18, welche auch als Deckellager bezeichnet wird, gegenüber den beiden Kupplungseinrichtungen K1, K2 zentriert beziehungsweise abgestützt. Die Betätigung der einzelnen Kupplungseinrichtungen K1, K2 beziehungsweise die Verlagerung der jeweiligen Anpressplatte 14, 15 erfolgt über Betätigungselemente 19, 20, die als Kolben oder Federelemente ausgeführt sein können, und im dargestellten Fall in Form von Drucktöpfen, welche als ringförmige Blechformteile mit einem axialen Beaufschlagungsbereich 21 und/oder axial ausgerichteten in Umfangsrichtung beabstandet zueinander angeordneten Zungen, wie für das Betätigungselement 20, welches nicht vollständig dargestellt ist, mit 22 bezeichnet und mit unterbrochener Linie dargestellt, ausgebildet sind, die an der jeweiligen Anpressplatte 14, 15 wirksam werden. Dabei erstrecken sich die am Drucktopf 20 für die zweite Kupplungseinrichtung K2 vorgesehenen Zungen 22 in axialer Richtung durch hier nicht dargestellte Öffnungen der Gegendruckplatte 12 der ersten Kupplungseinrichtung K1 hindurch, um mit der Anpressplatte 15 der zweiten Kupplungseinrichtung in Wirkverbindung gebracht zu werden. Diese Öffnungen können in Form von Schlitzen oder mit anderer Form ausgeführt sein. Ferner sind die Betätigungselemente 19 und 20 durch radiale Bereiche charakterisiert, welche unmittelbar von der Betätigungsvorrichtung 17 beaufschlagbar sind. Bei diesen Bereichen handelt es sich um Bereiche am Innenumfang 23 beziehungsweise 24 der einzelnen Drucktöpfe. Dabei weisen diese Bereiche am Innenumfang 23, 24 eine Mehrzahl von in Umfangsrichtung verteilten Öffnungen auf, die eine Luftzirkulation zur Kühlung ermöglichen.

Bei der dargestellten Ausführung sind beide Kupplungseinrichtungen K1, K2 beispielhaft derart ausgestaltet, dass diese über die Betätigungselemente 19, 20 zwangsweise geschlossen werden. Die für das Schließen erforderlichen Axialkräfte werden dabei direkt über die Betätigungsvorrichtung 17 aufgebracht. Dazu umfasst die Betätigungsvorrichtung 17 im dargestellten Fall zumindest zwei einzelne Einrückeinrichtungen 25 und 26, die koaxial angeordnet und zumindest teilweise in axialer Richtung ineinander geschachtelt sein können. Diese umfassen jeweils ein axial verlagerbares Betätigungslager, insbesondere Einrücklager 27 beziehungsweise 28. Die Einrücklager 27, 28 besitzen einen verdrehbaren Ring, der auf die einzelnen Betätigungselemente 19, 20 in Form der Drucktöpfe axial einwirken kann, um die für das zu übertragende Drehmoment erforderlichen Anpresskräfte auf die Anpressplatten 14 und 15 zu übertragen. Bezüglich des Aufbaus der Betätigungsvorrichtung 17 bestehen eine Vielzahl von Möglichkeiten. Diese kann, wie im dargestellten Fall, zwei ineinander geschachtelte Kolben-Zylindereinheiten aufweisen, die vorzugsweise hydraulisch und/oder auch pneumatisch beaufschlagbar sein können. Diese sind beispielhaft in einem gemeinsamen Gehäuse beziehungsweise Trägerteil 29 integriert. Andere Ausführungen sind denkbar.

Die Betätigungsvorrichtung 17 ist dabei über eine Lageranordnung 18 im Gehäuse 5, insbesondere dem Gehäusedeckel 16 gelagert und an diesen angebunden. Die Auslösung der Betätigungselemente 19, 20 durch axiale Verlagerung der jeweiligen Einrücklager 27, 28 erfolgt über die genannten Zylinder-/Kolbeneinheiten, welche im dargestellten Fall die Einrückeinrichtungen 25, 26 bilden. Dabei ist der jeweilige Kolben für die Einrückeinrichtung 25 mit 30 und die Einrückeinrichtung 26 mit 31 bezeichnet. Dieser ist als Ringkolben ausgebildet. Die einzelnen Kolben 30, 31 sind jeweils in Abhängigkeit eines über Druckmittel aufbringbaren Druckes im jeweils vom gemeinsamen Trägerteil 29 gebildeten Betätigungsvorrichtungsgehäuse 29.1 und 29.2 axial verlagerbar geführt. Die einzelnen Kolben 30 und 31 der Einrückeinrichtungen 25 und 26 bilden sogenannte Mitnehmerkolben, die über das Betätigungslager, hier in Form der Einrücklager 27 beziehungsweise 28, die erforderliche Anpresskraft aufbringen. Dazu wirken diese mit ihren wirksamen Kolbenflächen 41 und 42 auf das jeweilige Einrücklager 27, 28. Diese wirken wiederum auf die Betätigungselemente 19, 20, wobei die Wirkbereiche der einzelnen Einrücklager 27, 28 auf die einzelnen Betätigungselemente 19, 20 jeweils mit W1, W2 bezeichnet sind.

Dem einzelnen Kolben 30 ist ein Endanschlag E1 und dem Kolben 31 ein Endanschlag E2 zugeordnet. Der einzelne Endanschlag E1 und E2 ist erfindungsgemäß einstellbar. In der in Figur 1 a dargestellten Ausführung ist dabei das Kupplungsaggregat 1 im Zustand "geöffnet" wiedergegeben, in welchem an den einzelnen Kupplungsrichtungen K1 und K2 das jeweilige Lüftspiel L_{K1}, und L_{K2} vorliegt. In diesem Fall ist die Einrückeinrichtung 25 und 26 nicht betätigt. Das einzelne Betätigungselement 19, 20 befindet sich jeweils in seiner Endstellung im Zustand "geöffnet" und der Endanschlag E1, E2 ist zwischen dem Betätigungsgehäuse 29.1, 29.2 der Kolben 30, 31 und dem jeweiligen Betätigungslager, insbesondere Einrücklager 27, 28, angeordnet. Das erforderliche Richtmaß für die Einstellung des Endanschlages E1, E2 ergibt sich dabei als Funktion zumindest einer ein Ist-Lüftspiel der jeweiligen Kupplungseinrichtung K1, K2 wenigstens mittelbar charakterisierende Größe und zumindest eine die Geometrie der Betätigungsvorrichtung 17, insbesondere der dieser zugeordneten Einrückeinrichtung 25, 26 wenigstens mittelbar charakterisierenden Größe, wobei ein vorgebbares Soll-Lüftspiel als Funktion eines, den Sollabstand zwischen dem Betätigungsvorrichtungsgehäuse 29.1, 29.2 und dem Betätigungselement 19, 20 oder eines mit diesem gekoppelten Betätigungslagers 27, 28 wenigstens mittelbar beschreibenden Richtmaßes eingestellt wird. Die erfindungsgemäße Lösung geht davon aus, dass das einzelne Lüftspiel L_{K1}, L_{K2} mit der Position des Betätigungselementes 19, 20 gegenüber dem Betätigungsvorrichtungsgehäuses 29.1, 29.2 und aufgrund der Anbindung über die Lageranordnung 18 am Deckel 16 auch gegenüber einer Referenzfläche am Gehäuse 5 korreliert. Aus diesem Grund wird der Endanschlag E1 und E2 am Kolben 30, 31 genutzt, da dessen Lageänderung eine direkte Beeinflussung des Lüftspiels L_{K1}, L_{K2} aufgrund der Lageänderung der Betätigungselemente 19, 20, insbesondere der jeweiligen wirksamen Kolbenlänge zwischen Betätigungsvorrichtung 17 und Betätigungselement 19, 20 bewirkt. Dazu ist der Endanschlag E1 durch Veränderung der Lage der Endanschlagsfläche 39 beziehungsweise 40 in axialer Richtung gegenüber der Erstreckung des Kolbens 30, 31 in Längsrichtung betrachtet und damit gegenüber der am Betätigungselement 19, 20 beziehungsweise Einrücklager 27, 28 wirksamen Kolbenfläche 41, 42 verstellbar.

Als die das Ist-Lüftspiels der Kupplungseinrichtung K1, K2 wenigstens mittelbar beschreibenden Größe können entweder direkt das Ist-Lüftspiel oder dieses über Geometrievermessung der Kupplungseinrichtung K1, K2 charakterisierende Größen fungieren. Im zweiten Fall erfolgt die Einstellung des Endanschlages E1, E2 dann als Funktion der Geometrie der Kupplungseinrichtung K1 beziehungsweise K2 sowie der Geometrie der Betätigungsvorrichtung 17, insbesondere der Abmaße der Betätigungselemente 19, 20, der Anpressplatte, des Einrücklagers 27, 28 sowie der Kolbenlänge das jeweilige Lüftspiel L_{K1}, beziehungsweise L_{K2} der einzelnen Kupplungseinrichtungen K1, K2 oder der diese zumindest mittelbar beschreibenden Größen. Die Soll-Lage des einzelnen Endanschlages E1 und E2 wird dabei gegenüber der wirksamen Kolbenfläche 41, 42 in Wirkrichtung auf die Betätigungslager, insbesondere Einrücklager 27, 28 eingestellt.

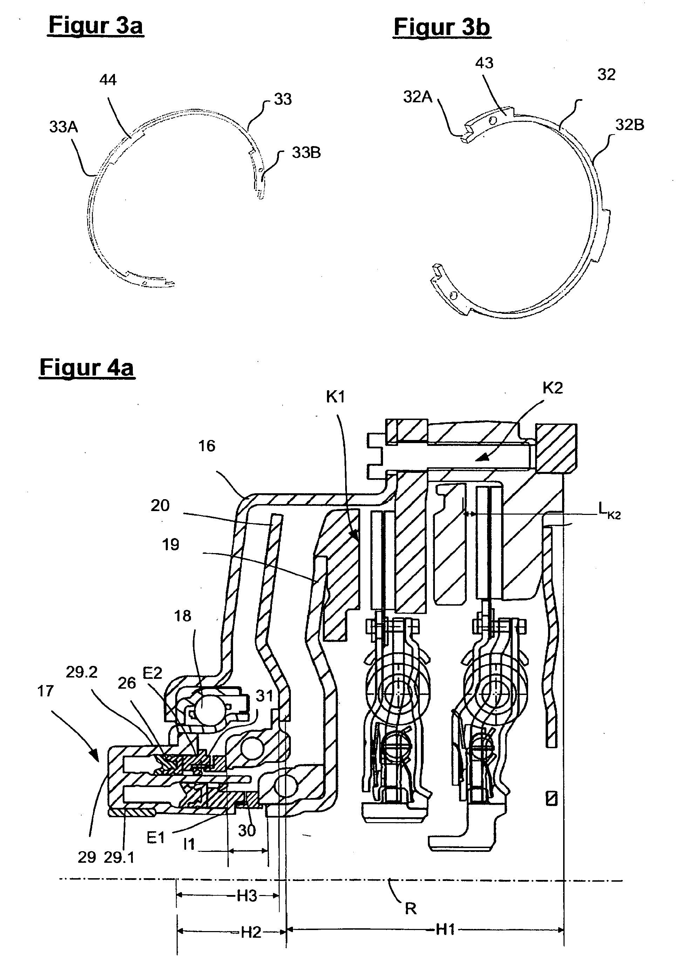

Im dargestellten Fall wird die Funktion des einstellbaren Endanschlages E1 und E2 jeweils von zumindest einem ringförmigen oder vorzugsweise zum Zwecke einer einfachen Montage ringsegmentförmigen Abstandselementes in Form eines Schimmelementes 32, 33 übernommen. Die einzelnen Schimmelemente 32, 33 sind im Detail in den Figuren 3a und 3b in einer Perspektivansicht wiedergegeben und bilden mit ihren beiden axialen Stirnseiten 32A, 32B, 33A, 33B, jeweils Anlageflächen am Kolben 30, 31 und dem jeweiligen Betätigungsvorrichtungsgehäuse 29.1, 29.2, wobei bei Zuordnung zum Kolben 30, 31 die Stirnseiten 32B, 33B als Endanschlagflächen 39, 40 fungieren. Diese weisen ferner vorzugsweise Befestigungsgmittel zur Lagefixierung am jeweiligen Betätigungsvorrichtungsgehäuse 29.1, 29.2 oder am Kolben 30, 31 auf. Beispielhaft ist hier das Schimmelement 32 am Innenumfang des Kolbens 30 und das Schimmelement 33 zur Einstellung des Endanschlages E2 am Außenumfang des Kolbens 31 fixiert. Die Fixierung, vorzugsweise Befestigung erfolgt durch form- oder kraftschlüssige Befestigungsmittel 43, 44, im dargestellten Fall formschlüssige Befestigungsmittel 43 am Schimmelement 32, insbesondere am Außenumfang angeordnete, sich in radialer Richtung und über einen Teilbereich der Erstreckung des ringsegmentartigen Grundkörpers des Schimmelementes 32 in Umfangsrichtung erstreckende Vorsprünge, die in entsprechend komplementäre Ausnehmungen am Innenumfang am Kolben 30 einbringbar sind. Demgegenüber erfolgt die Befestigung des Schimmelementes 33 durch form- oder kraftschlüssige Befestigungsmittel 44, im dargestellten Fall formschlüssiger Befestigungsmittel 44 in Form von am Innenumfang des ringsegmentartigen Grundkörpers des Schimmelementes 33 angeordneten, sich in radialer Richtung und über einen Teilbereich der Erstreckung des ringsegmentartigen Grundkörpers des Schimmelementes 33 in Umfangsrichtung erstreckende Vorsprünge, die in entsprechend komplementäre Ausnehmungen am Außenumfang des Kolbens 31 einbringbar sind. Dadurch erfolgt auch eine Sicherung gegenüber Verdrehung, vorzugsweise eine drehfeste Verbindung.

Das jeweilige Schimmelement 32, 33 ist durch eine Dicke d1, d2 charakterisiert, welche als Funktion eines die Soll-Lage des Endanschlages E1, E2 gegenüber einer Referenzfläche an der Betätigungsvorrichtung zumindest mittelbar beschreibenden Richtmaßes bestimmbar ist. Vorzugsweise entspricht das Richtmaß einem jeweils erforderlichen Schimmmaß S1, S2, welches direkt der Dicke d1, d2 entspricht und damit den Abstand zwischen dem Betätigungsvorrichtungsgehäuse 29.1, 29.2 und dem Betätigungselement 19, 20 beziehungsweise einem mit diesem gekoppelten Element durch Einstellung einer Soll-Lage des Endanschlages E1 beziehungsweise E2 gegenüber der jeweils wirksamen Kolbenfläche 41, 42 oder des Betätigungselementes 19, 20 oder des Einrücklagers 27, 28 beeinflusst. Das Richtmaß entspricht hier somit einem Änderungsmaß dieses Abstandes.

Das einzelne Schimmelement 32, 33 ist austauschbar und kann daher bei zunehmendem Verschleiß gegen ein anderes Schimmelement größerer Dicke ausgetauscht werden. Die Abstützung am jeweiligen Kolben 30, 31 erfolgt an axialen Flächen, die an radialen Vorsprüngen 37 und 38 ausgebildet sind. Das einzelne Schimmelement 32, 33 kann jeweils ortsfest oder aber auch mit Spiel in axialer Richtung am Kolben 30, 31 befestigt sein.

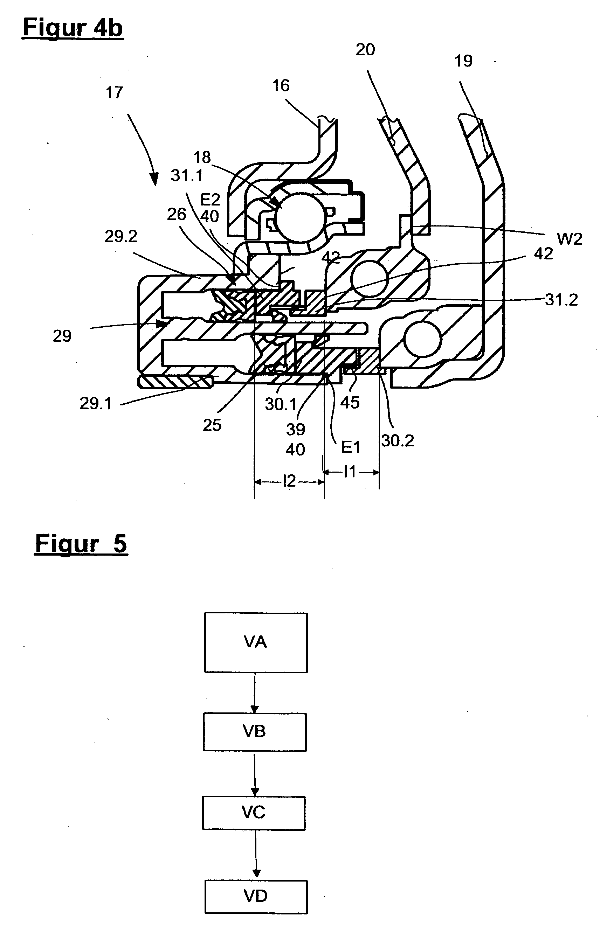

Demgegenüber verdeutlichen Figuren 4a und 4b eine dritte Variante der ersten Ausführung zur Einstellung des Lüftspiel L_{K1}, beziehungsweise L_{K2} der einzelnen Kupplungseinrichtungen K1, K2 durch Einstellung des Abstandes zwischen dem Betätigungsvorrichtungsgehäuse 29.1, 29.2 und aufgrund der Anbindung über eine Lageranordnung 18 an den Deckel auch zwischen einer möglichen Referenzfläche am Gehäuse 5 und dem Betätigungselement 19, 20 beziehungsweise der mit diesen gekoppelten Einrücklager 27, 28.

Der Grundaufbau der Kupplungseinrichtungen K1, K2 und der Betätigungselemente 19, 20 entspricht dem in den Figuren 1 a und 1b. beschriebenen, weshalb für gleiche Elemente gleiche Bezugsziffern verwendet werden und zur Vermeidung von Wiederholungen auf die Figuren 1 a, 1 b verwiesen wird. Entscheidend ist, dass die Endanschlagsfläche 39, 40 am jeweiligen Kolben ortsfest ist, jedoch die Kolben 30, 31 zumindest zweiteilig ausgebildet und die so gebildeten Kolbenteile 30.1, 30.2, 31.1, 31.2 in axialer Richtung gegeneinander verlagerbar, insbesondere verschiebbar oder verdrehbar sind. Die Verstellung erfolgt über die Auslegung und Ausbildung der Verbindung 45, 46 zwischen den Kolbenteilen 30.1, 30.2 und 31.1, 31.2.

Die Verschiebung kann durch eine Relativbewegung beider Kolbenteile 30.1, 30.2 und 31.1, 31.2 in Längsrichtung der Kolbenachse betrachtet erfolgen oder eine überlagerte Bewegung in dieser und in Umfangsrichtung. Im einfachsten Fall ist die Verbindung 45, 46 als Schraubverbindung ausgebildet.

Das erforderliche Einstellmaß für die Position des Endanschlages E1 oder E2 erfolgt dabei als Funktion eines erforderlichen Richtwertes für ein Einstellmaß für den Endanschlag E1, E2 oder den Anschlag 34, 35, der durch den axialen Abstand von der wirksamen Kolbenfläche 41, 42 beziehungsweise Einrücklager 27, 28 oder dem Betätigungsvorrichtungsgehäuse 29.1, 29.2 ist. Die geometrisch relevanten Größen der Kupplungseinrichtungen K1 und K2 werden gegenüber der Anbindungsumgebung dieser, insbesondere dem Gehäuse 5 und der Lageranordnung 18, insbesondere dem Deckellager, bestimmt. Diese werden durch entsprechende Höhenmaße charakterisiert, die den Raum zwischen der Wandung des Gehäuses 5 und dem Wirkbereich des Betätigungselementes 19 und der Anpressplatte 14 wiedergeben. Diesen direkt entsprechend kann aus diesen die erforderliche Kolbenlänge abgeleitet werden, aus welcher die Lagerendanschläge E1 und E2 abgeleitet werden können. Die zur Einstellung des erforderlichen Lüftspiels L_{K1}, und L_{K2} erforderliche Anschlagsposition in Abhängigkeit der übrigen Geometrie der einzelnen Kupplungseinrichtungen K1 und K2 erfolgt dann durch die Änderung des Endanschlags. Entsprechende Höhenmaße H1, H2 und H3 sind in Figur 1 a und Figur 4b beispielhaft nur für die Kupplungseinrichtung K1 eingetragen. Die Höhenmaße H1 und H2 beschreiben die geometrisch relevanten Größen der Kupplungseinrichtung K1 und werden gegenüber der Anbindungsumgebung dieser, insbesondere dem Gehäuse 5 und der Lageranordnung 18 bestimmt. Dabei bestimmt das Höhenmaß H1 den Abstand der Kupplungseinrichtung K1 von der kupplungsseitigen Gehäusewandung, insbesondere den Raum zwischen Gehäusewandung und Wirkbereich des Betätigungselementes 19 an der Anpressplatte 14.

Das Höhenmaß H2 der Kupplungseinrichtung K1 charakterisiert ein den umschlossenen Raum zwischen Gehäuse 5 und Betätigungselement 19 charakterisierendes Abmaß. Dieses kann durch den Abstand zwischen dem Wirkbereich des Betätigungselementes 19 an der Anpressplatte 14 und der Anbindung der Betätigungsvorrichtung 17 am Gehäuse 5, insbesondere dem Deckellager 18 beschrieben werden.

Das Höhenmaß H3 bestimmt den vom Einrücksystem, insbesondere der Betätigungsvorrichtung 17 definierten Raum. Das Höhenmaß H3 kann als axiales Abstandsmaß der Betätigungseinrichtung 25 zum Betätigungselement 19 angesehen werden und entspricht einem axialen Abstand zwischen einem am Betätigungselement 19, insbesondere Drucktopf zur Beaufschlagung der Anpressplatte 14 vorgesehenen Wirkbereich W1 und der Anbindung am Kupplungsgehäuse 5, insbesondere der Lageranordnung 18.

Das erforderliche Maß für die Verstellung des Endanschlages E1, E2 ergibt sich dabei als Funktion zumindest einer ein Ist-Lüftspiel wenigstens mittelbar charakterisierende Größe und zumindest eine die Geometrie der Betätigungsvorrichtung wenigstens mittelbar charakterisierenden Größe, wobei ein vorgebbares Soll-Lüftspiel durch die Variation des jeweiligen Endanschlages E1, E2 an den einzelnen Kupplungseinrichtungen K1, K2 eingestellt wird. Figur 5 verdeutlicht beispielhaft die Vorgehensweise. In Verfahrensschritt VA erfolgt die Vermessung einer das Ist-Lüftspiel wenigstens mittelbar charakterisierende Größe und zumindest eine die Geometrie der Betätigungsvorrichtung wenigstens mittelbar charakterisierenden Größe. In Verfahrensschritt VB erfolgt die Verrechnung und Bestimmung des Richtmaßes, insbesondere bei einer Ausführung gemäß Figur 1a der Schimmmaße S1, S2, in Figur 4a, 4b der Änderung der Abstände l1, l2 zwischen Betätigungsvorrichtungsgehäuse 29.1, 29.2 und wirksamer Kolbenfläche 41, 42 und damit der wirksamen Kolbenlängen. Im Verfahrensschritt VC wird das Maß entsprechend eingestellt, für die Ausführung in Figur 1 awird dazu das jeweilige Schimmelement 32, 33 eingelegt, in Figur 4a, 4b werden die Kolbenteile 30.1, 30.2 beziehungsweise 31.1, 31.2 gegeneinander bewegt. VD beinhaltet den Einbau der Betätigungsvorrichtung 17 in die Kupplungseinrichtungen K1, K2 und die Montage des Deckels. Die einzelnen Montagekomponenten sind dazu in einer Explosionsdarstellung gemäß Figur 2 nocheinmal wiedergegeben.

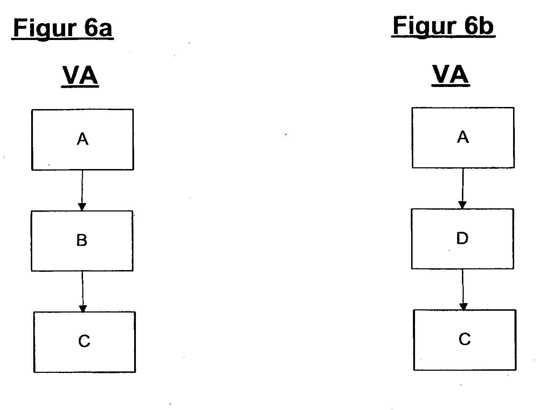

Die Figur 6a verdeutlicht beispielhaft anhand eines Signalflussbildes die einzelnen Verfahrensschritte bei der Einstellung eines Lüftspiels L_{K1} am Beispiel der Kupplungseinrichtung K1 durch geometrische Vermessung im Verfahrensschritt VA. Dabei wird im ersten Verfahrensschritt A die Kupplungseinrichtung K1 an einer Halteplatte, welche von einer kupplungsseitigen Gehäusewandung gebildet werden kann oder von der Lageranordnung 18 aufgenommen wird, und in einem nachgeordneten Verfahrensschritt B zunächst an einer Prüfvorrichtung über das Betätigungselement 19, insbesondere den Drucktopf oder einen Einstellmeister, ein so genanntes geometrisches Höhemaß H1 und/oder H2 bestimmt. Dabei entspricht dieses Höhenmaß beispielsweise dem Abstand des Drucktopfes von einer kupplungsseitigen Gehäusewandung oder Lageranordnung 18. Für die Genauigkeit der Lüftspielseinstellung ist es jedoch erforderlich, das geometrisch relevante Höhenmaß H3 des über die Lageranordnung 18 angebundenen und durch die Betätigungsvorrichtung 17 wirkenden Einrücksystem, insbesondere der Einrückeinrichtung 25 ebenfalls zu vermessen, was im Verfahrensschritt C erfolgt. Durch die Verrechnung der beiden gemessenen geometrischen Größen wird ein Richt- beziehungsweise Einstellmaß für die Ausgestaltung, Anordnung und Dimensionierung des Endanschlages E1, E2 am Kolben oder Anschlages 34, 35 am Betätigungsvorrichtungsgehäuse 29.1, 29.2. Das geforderte Richtmaß für die Einstellung des Endanschlages E1 beziehungsweise E2 ergibt sich dabei in Abhängigkeit des gewünschten Soll-Lüftspiels L_{K1-soll} und der entsprechenden Höhenmaße H1, H2, H3 entsprechend Verfahrensschritt VB.

Demgegenüber verdeutlicht das Signalflußbild in Figur 6b eine weitere Möglichkeit der Bestimmung des Lüftspiels entsprechend VA. Bei den zur Einstellung erforderlichen relevanten Größen handelt es sich dabei um ein Höhenmaß H3 und das Lüftspiel L_{K1-ist}, welches über die Ermittlung der Kraft über den Einstellweg bis zum Erreichen eines Tastpunkts charakterisiert ist. Dieser Verfahrensschritt D ersetzt dabei den Verfahrensschritt B gemäß der Ausführung des Verfahrens, dargestellt in Figur 6a.

### Bezugszeichenliste

- 1: Kupplungsaggregat
- 2: Doppelkupplung
- 3: Kurbelwelle
- 4: Arbeitsplatte
- 5: Gehäuse
- 6: Kupplungsscheibe
- 7: Kupplungsscheibe
- 8: Reibfläche
- 8.1, 8.2: Reibfläche
- 9.1, 9.2: Reibfläche
- 10: Träger
- 11: Träger
- 12: Gegendruckplatte
- 13: Gegendruckplatte
- 14: Anpressplatte
- 15: Anpressplatte
- 16: Bandbestandteil
- 17: Betätigungsvorrichtung
- 18: Lageranordnung
- 19: Betätigungselement
- 20: Betätigungselement
- 21: Zunge
- 22: Zunge
- 23: Innenumfang
- 24: Innenumfang
- 25: Einrückeinrichtung
- 26: Einrückeinrichtung
- 27: Ausrücklager
- 28: Ausrücklager
- 29: Trägerteil
- 30: Kolben
- 31: Kolben
- 33: Abstandselement, Schimmelement
- 33: Abstandselerrient, Schimmelement
- 34: Anschlag am Betätigungsvorrichtungsgehäuse
- 35: Anschlag am Betätigungsvorrichtungsgehäuse
- 37: Vorsprung
- 38: Vorsprung
- 39: Endanschlagfläche am Kolben
- 40: Endanschlagfläche am Kolben
- 41: wirksame Kolbenfläche
- 42: wirksame Kolbenfläche
- 43: Mittel zur Befestigung
- 44: Mittel zur Befestigung
- 45: Verbindung
- 46: Verbindung
- d1, d2: Dicke
- S1, S2: Schimmmaß
- K1: erste Kupplungseinrichtung
- K2: zweite Kupplungseinrichtung
- L_{K1}: Lüftspiel Kupplungseinrichtung K1
- L_{K2}: Lüftspiel Kupplungseinrichtung K2
- L_{K1}-_{Ist}, L_{K2-Ist}: Istwert Lüftspiel Kupplung 1, 2
- L_{K1-soll}, L_{K2-soll}: Sollwert Lüftspiel Kupplung 1, 2
- H1: Höhenmaß der Kupplungseinrichtung K1 erste Variante
- H2: Höhenmaß der Kupplungseinrichtung K1 zweite Variante
- H3: Höhenmaß der Betätigungsvorrichtung
- F: Kraft

## Patentansprüche

1. Verfahren zur Einstellung des Lüftspiels (L_{K1}, L_{K2}) einer direktbetätigbaren Kupplungseinrichtung (K1, K2) mit einem Gehäuse (5) und einer im Gehäuse (5) über ein Deckellager (18) gegenüber der Kupplungseinrichtung (K1, K2) zentrierten, beziehungsweise abgestützten und lagerbaren Betätigungsvorrichtung (17) mit zumindest einem in einem Betätigungsvorrichtungsgehäuse (29.1, 29.2) axial verlagerbaren Kolben (30, 31) zum Aufbringen einer Betätigungskraft frei von Übersetzungen auf ein an der Kupplungseinrichtung (K1, K2) wirkendes Betätigungselement (19, 20) und einem am Kolben (30, 31) vorgesehenen und im geöffneten Zustand der Kupplungseinrichtung (K1, K2) mit einem Anschlag (34, 35) am Betätigungsvorrichtungsgehäuse (29.1, 29.2) zusammenwirkenden Endanschlag (E1, E2),wobei ein vorgebbares Soll-Lüftspiel (L_{K1-Soll}, L_{K2-Soll}) an der Kupplungseinrichtung (K1, K2) als Funktion zumindest einer, ein Ist-Lüftspiel (L_{K1-ist}) wenigstens mittelbar charakterisierenden Größe und zumindest einer die Geometrie der Betätigungsvorrichtung (17) wenigstens mittelbar charakterisierenden Größe durch Einstellen des Endanschlages (E1, E2) am Kolben (30, 31) oder des Anschlages (34, 35) am Betätigungsvorrichtungsgehäuse (29.1, 29.2) eingestellt wird, **dadurch gekennzeichnet, dass** der Endanschlag (E1, E2) am Kolben (30, 31) oder der Anschlag (34, 35) an der Betätigungsvorrichtung (17) von einem zwischen Kolben (30, 31) und Betätigungsvorrichtungsgehäuse (29.1, 29.2) angeordneten axialen Abstandselement (32, 33), insbesondere Schimmelement gebildet wird, das bei Zuordnung zum Kolben (30, 31) eine Endanschlagfläche (39, 40) bildet und bei Zuordnung zum Betätigungsvorrichtungsgehäuse (29.1, 29.2) eine Anschlagfläche (34, 35) bildet und dessen Dicke (d1, d2) als Funktion eines Sollabstandes zwischen dem Betätigungsvorrichtungsgehäuse (29.1, 29.2) und dem Betätigungselement (19, 20) oder eines mit diesem gekoppelten Betätigungslagers (27, 28) wenigstens mittelbar beschreibenden Richtmaßes, insbesondere eines Maßes für die Dicke (d1, d2) des Abstandselementes (32, 33) eingestellt wird, wobei die Position des Endanschlags (E1, E2) oder Anschlages (34, 35) durch gezielte Auswahl des Abstandselements oder die Reihenschaltung derartiger Abstandselemente eingestellt wird.

2. Verfahren nach Anspruch 1, **dadurch gekennzeichnet, dass** die Einstellung in nachfolgenden Verfahrensschritten erfolgt:
- Vermessung der Kupplungseinrichtung (VA), insbesondere Ermittlung (A, B) einer das Ist-Lüftspiel (L_{K1-ist}) wenigstens mittelbar charakterisierenden Größe und Ermittlung und zumindest einer die Geometrie der Betätigungsvorrichtung (17) wenigstens mittelbar charakterisierenden Größe (C);
- Verrechnung der durch Vermessung ermittelten Größen (VB) und Ermittlung eines Richtmasses zur Einstellung des Endanschlages (E1, E2) am Kolben (30, 31) oder Anschlages (34, 35) am Betätigungsvorrichtungsgehäuse (29.1, 29.2);
- Einstellung (VC) des Endanschlages (E1, E2) oder Anschlages (34, 35);
- Montage der Kupplungseinrichtung (K1, K2) und der Betätigungsvorrichtung (17).

3. Verfahren nach einem der Ansprüche 1 und 2, **dadurch gekennzeichnet, dass** zur Bestimmung eines Ist-Lüftspiels (L_{K1-ist}) die Kupplungseinrichtung (K1, K2) über eine vom Gehäuse (5) gebildete oder an diesem vorgesehene Halteplatte oder die Lageranordnung (8) aufgenommen wird, und die zumindest eine, das Ist-Lüftspiel (L_{K1}-ᵢₛₜ) wenigstens mittelbar charakterisierende Größe von zumindest einem Ist-Wert zumindest einer die Geometrie der Kupplungseinrichtung (K1) im entlasteten Zustand wenigstens mittelbar charakterisierenden Größe gebildet wird, welche zumindest ein den von der Kupplungseinrichtung (K1, K2) umschlossenen Bauraum beschreibendes, auf die Lageranordnung (18) und/oder das Gehäuse (5) bezogenes relevantes Höhenmaß (H1, H2) der Kupplungseinrichtung (K1, K2) beinhaltet.

4. Verfahren nach Anspruch 3, **dadurch gekennzeichnet, dass** als zumindest ein relevantes Höhenmaß (H1, H2) der Kupplungseinrichtung (K1, K2) ein erstes und/oder zweites Höhenmaß (H1) angesehen wird, wobei das erste Höhenmaß (H1) den axialen Abstand des an der Kupplungseinrichtung (K1, K2) wirkenden Bereichs des Betätigungselementes (19, 20) von einer kupplungsseitig angeordneten Wandung des Gehäuses (5) beinhaltet und wobei ein zweites Höhenmaß den axialen Abstand des an der Kupplungseinrichtung (K1, K2) wirkenden Bereichs des Betätigungselementes (19, 20) von einer betätigungsvorrichtungsseitigen Wandung des Gehäuses (5), insbesondere der die Betätigungsvorrichtung (17) am Gehäuse (5) abstützenden Lageranordnung (18) beinhaltet.

5. Verfahren nach einem der Ansprüche 1 bis 3, **dadurch gekennzeichnet, dass** die Kupplungseinrichtung (K1, K2) über die, die Betätigungsvorrichtung (17) am Gehäuse (5) abstützende Lageranordnung (18) aufgenommen wird und das Ist-Lüftspiel (L_{K1-ist}) durch eine Kraft-Wegmessung (F/S) ermittelt wird.

6. Verfahren nach einem der Ansprüche 3 bis 5, **dadurch gekennzeichnet, dass** als die Geometrie der Betätigungsvorrichtung (17) wenigstens mittelbar charakterisierenden Größe ein geometrisch relevantes Höhenmaß (H3) der Betätigungsvorrichtung (17) angesehen wird, welches den axialen Abstand zwischen der Anbindung der Betätigungsvorrichtung (17) am Gehäuse (5) und dem Wirkbereich der Betätigungsvorrichtung am Betätigungselement (19, 20) beinhaltet.

## Claims

1. Method for setting the clearance (L_{K1}, L_{K2}) of a directly actuable clutch device (K1, K2) with a housing (5) and an actuating apparatus (17) which is centred with respect to the clutch device (K1, K2), or is supported and can be mounted, in the housing (5) via a cap bearing (18), with at least one piston (30, 31) which can be displaced axially in an actuating apparatus housing (29.1, 29.2) for applying an actuating force in a manner which is free from transmission ratios to an actuating element (19, 20) which acts on the clutch device (K1, K2), and with an end stop (E1, E2) which is provided on the piston (30, 31) and which interacts with a stop (34, 35) on the actuating apparatus housing (29.1, 29.2) in the open state of the clutch device (K1, K2), a predefinable setpoint clearance (L_{K1-soll}, L_{K2-soll}) being set on the clutch device (K1, K2) as a function of at least one variable which at least indirectly characterizes an actual clearance (L_{K1}-ᵢₛₜ) and at least one variable which at least indirectly characterizes the geometry of the actuating apparatus (17) by way of setting of the end stop (E1, E2) on the piston (30, 31) or the stop (34, 35) on the actuating apparatus housing (29.1, 29.2), **characterized in that** the end stop (E1, E2) on the piston (30, 31) or the stop (34, 35) on the actuating apparatus (17) is formed by an axial spacing element (32, 33), in particular a floating element, which is arranged between the piston (30, 31) and the actuating apparatus housing (29.1, 29.2), and, if allocated to the piston (30, 31), forms an end stop face (39, 40) and, if allocated to the actuating apparatus housing (29.1, 29.2), forms a stop face (34, 35), and the thickness (d1, d2) of which spacing element (32, 33) is set as a function of a setpoint spacing between the actuating apparatus housing (29.1, 29.2) and the actuating element (19, 20) or of a standard dimension which at least indirectly describes with the said coupled actuating bearing (27, 28), in particular a dimension for the thickness (d1, d2) of the spacing element (32, 33), the position of the end stop (E1, E2) or stop (34, 35) being set by way of targeted selection of the spacing element or the connection in series of spacing elements of this type.

2. Method according to Claim 1, **characterized in that** the setting takes place in the following method steps:
- measuring of the clutch device (VA), in particular determination (A, B) of a variable which at least indirectly characterizes the actual clearance (L_{K1-ist}), and determination of at least one variable (C) which at least indirectly characterizes the geometry of the actuating apparatus (17);
- calculating of the variables (VB) which are determined by way of measuring, and determination of a standard dimension for setting the end stop (E1, E2) on the piston (30, 31) or stop (34, 35) on the actuating apparatus housing (29.1, 29.2);
- setting (VC) of the end stop (E1, E2) or stop (34, 35) ;
- mounting of the clutch device (K1, K2) and the actuating apparatus (17).

3. Method according to either of Claims 1 and 2, **characterized in that**, in order to determine an actual clearance (L_{K1-ist}), the clutch device (K1, K2) is received via a holding plate which is formed by the housing (5) or is provided on the latter or via the bearing arrangement (8), and the at least one variable which at least indirectly characterizes the actual clearance (L_{K1}-ᵢₛₜ) is formed by at least one actual value of at least one variable which at least indirectly characterizes the geometry of the clutch device (K1) in the relieved state and contains at least one relevant height dimension (H1, H2) of the clutch device (K1, K2) which describes the installation space which is enclosed by the clutch device (K1, K2) and is related to the bearing arrangement (18) and/or the housing (5).

4. Method according to Claim 3, **characterized in that** a first and/or second height dimension (H1) is considered to be at least one relevant height dimension (H1, H2) of the clutch device (K1, K2), the first height dimension (H1) containing the axial spacing of that region of the actuating element (19, 20) which acts on the clutch device (K1, K2) from a wall of the housing (5) which is arranged on the clutch side, and a second height dimension containing the axial spacing of that region of the actuating element (19, 20) which acts on the clutch device (K1, K2) from a wall of the housing (5) which is on the side of the actuating apparatus, in particular of the bearing arrangement (18) which supports the actuating apparatus (17) on the housing (5).

5. Method according to one of Claims 1 to 3, **characterized in that** the clutch device (K1, K2) is received via the bearing arrangement (18) which supports the actuating apparatus (17) on the housing (5), and the actual clearance (L_{K1-ist}) is determined by way of a force/displacement measurement (F/S).

6. Method according to one of Claims 3 to 5, **characterized in that** a geometrically relevant height dimension (H3) of the actuating apparatus (17) is considered to be a variable which at least indirectly characterizes the geometry of the actuating apparatus (17), which height dimension (H3) contains the axial spacing between the attachment of the actuating apparatus (17) on the housing (5) and the region of action of the actuating apparatus on the actuating element (19, 20).

## Revendications

1. Procédé pour régler le jeu (Lₖ₁, L_{K2}) d'un dispositif d'embrayage à actionnement direct (K1, K2) avec un boîtier (5) et un dispositif d'actionnement (17) centré dans le boîtier (5), ou appuyé ou supportable au moyen d'un palier de couvercle (18), par rapport au dispositif d'embrayage (K1, K2), avec au moins un piston (30, 31) déplaçable axialement dans un boîtier de dispositif d'actionnement (29.1, 29.2) pour l'application d'une force d'actionnement sans éléments de transmission à un élément d'actionnement (19, 20) agissant sur le dispositif d'embrayage (K1, K2) et une butée d'extrémité (E1, E2) prévue sur le piston (30, 31) et coopérant à l'état ouvert du dispositif d'embrayage (K1, K2) avec une butée (34, 35) sur le boîtier de dispositif d'actionnement (29.1, 29.2), dans lequel on règle un jeu de consigne (L_{K1-cons}, L_{K2-cons}) au dispositif d'embrayage (K1, K2) en fonction d'au moins une grandeur caractérisant au moins indirectement un jeu réel (L_{K1-réel}) et d'au moins une grandeur caractérisant au moins indirectement la géométrie du dispositif d'actionnement (17) par le réglage de la butée d'extrémité (E1, E2) sur le piston (30, 31) ou de la butée (34, 35) sur le boîtier de dispositif d'actionnement (29.1, 29.2), **caractérisé en ce que** la butée d'extrémité (E1, E2) sur le piston (30, 31) ou la butée (34, 35) sur le dispositif d'actionnement (17) est formée par un élément d'écartement axial (32, 33), en particulier un élément de cale, disposé entre le piston (30, 31) et le boîtier de dispositif d'actionnement (29.1, 29.2), lequel, en cas d'association avec le piston (30, 31) forme une face de butée d'extrémité (39, 40) et en cas d'association avec le boîtier de dispositif d'actionnement (29.1, 29.2) forme une face de butée (34, 35), et on règle son épaisseur (d1, d2) en fonction d'une distance de consigne entre le boîtier de dispositif d'actionnement (29.1, 29.2) et l'élément d'actionnement (19, 20) ou d'une cote de référence décrivant au moins indirectement un palier d'actionnement (27, 28) couplé à celui-ci, en particulier une cote pour l'épaisseur (d1, d2) de l'élément d'écartement (32, 33), dans lequel on règle la position de la butée d'extrémité (E1, E2) ou de la butée (34, 35) par un choix judicieux de l'élément d'écartement ou le placement en série de tels éléments d'écartement.

2. Procédé selon la revendication 1, **caractérisé en ce que** le réglage est effectué dans les étapes de procédé suivantes:
- mesure du dispositif d'embrayage (VA), en particulier détermination (A, B) d'une grandeur caractérisant au moins indirectement le jeu réel (L_{K1-réel}) et détermination d'au moins une grandeur (C) caractérisant au moins indirectement la géométrie du dispositif d'actionnement (17);
- calcul des grandeurs (VB) déterminées par mesure et détermination d'une cote de référence pour le réglage de la butée d'extrémité (E1, E2) sur le piston (30, 31) ou de la butée (34, 35) sur le boîtier de dispositif d'actionnement (29.1, 29.2);
- réglage (VC) de la butée d'extrémité (E1, E2) ou de la butée (34, 35) ;
- montage du dispositif d'embrayage (K1, K2) et du dispositif d'actionnement (17).

3. Procédé selon une des revendications 1 et 2, **caractérisé en ce que**, pour la détermination d'un jeu réel (L_{K1-réel}), le dispositif d'embrayage (K1, K2) est porté par une plaque de maintien formée par le boîtier (5) ou prévue sur celui-ci ou par l'ensemble de palier (8), et ladite au moins une grandeur caractérisant au moins indirectement le jeu réel (L_{K1-réel}) est formée par au moins une valeur réelle d'au moins une grandeur caractérisant au moins indirectement la géométrie du dispositif d'embrayage (K1) à l'état déchargé, qui contient au moins une cote de hauteur pertinente (H1, H2) du dispositif d'embrayage (K1, K2), qui décrit l'espace de montage entouré par le dispositif d'embrayage (K1, K2) et qui est relative à l'ensemble de palier (18) et/ou au boîtier (5).

4. Procédé selon la revendication 3, **caractérisé en ce que** l'on considère une première et/ou une deuxième cote de hauteur (H1) comme au moins une cote de hauteur pertinente (H1, H2) du dispositif d'embrayage (K1, K2), dans lequel la première cote de hauteur (H1) contient la distance axiale de la région de l'élément d'actionnement (19, 20) agissant sur le dispositif d'embrayage (K1, K2) par rapport à la paroi du boîtier (5) disposée côté embrayage, et dans lequel une deuxième cote de hauteur contient la distance axiale de la région de l'élément d'actionnement (19, 20) agissant sur le dispositif d'embrayage (K1, K2) par rapport à une paroi du boîtier (5) côté dispositif d'actionnement, en particulier de l'ensemble de palier (18) supportant le dispositif d'actionnement (17) sur le boîtier (5).

5. Procédé selon l'une quelconque des revendications 1 à 3, **caractérisé en ce que** le dispositif d'embrayage (K1, K2) est porté par l'ensemble de palier (18) supportant le dispositif d'actionnement (17) sur le boîtier (5) et le jeu réel (L_{K1-réel}) est déterminé par une mesure force-course (F/S).

6. Procédé selon l'une quelconque des revendications 3 à 5, **caractérisé en ce que** l'on considère comme grandeur caractérisant au moins indirectement la géométrie du dispositif d'actionnement (17), une cote de hauteur géométriquement pertinente (H3) du dispositif d'actionnement (17), qui contient la distance axiale entre la liaison du dispositif d'actionnement (17) au boîtier (5) et la région d'action du dispositif d'actionnement sur l'élément d'actionnement (19, 20).
